# EUROPÄISCHE PATENTSCHRIFT

(11) **EP 3 810 555 B1**
(45) Veröffentlichungstag und Bekanntmachung des Hinweises auf die Patenterteilung: **28.09.2022**
(21) Anmeldenummer: 18836475.6
(22) Anmeldetag: 21.12.2018
(51) Int. Cl.: C02F 9/00, C02F 11/121, C02F 11/145, C02F 11/15, C02F 1/34, C02F 1/52, C02F 1/48

(54) **VERFAHREN ZUR REINIGUNG UND ENTKEIMUNG VON FLÜSSIGEN UND/ODER WÄSSRIGEN MEDIEN (SUSPENSIONEN)**
METHOD FOR CLEANING AND STERILIZING LIQUID AND/OR AQUEOUS MEDIA (SUSPENSIONS)
PROCÉDÉ POUR LE NETTOYAGE ET LA DÉSINFECTION DE MILIEUX LIQUIDES ET/OU AQUEUX (SUSPENSIONS)

(30) Priorität: 23.11.2018 WO PCT/EP2018/082436
(43) Veröffentlichungstag der Anmeldung: 28.04.2021
(73) Patentinhaber: Schulze Isfort, Alfons, 48341 Altenberge (DE); Schulze Isfort, Dominik, 48341 Altenberge (DE); Schulze Isfort, Gero, 33428 Harsewinkel (DE)
(72) Erfinder: Schulze Isfort, Alfons, 48341 Altenberge (DE); Schulze Isfort, Dominik, 48341 Altenberge (DE); Schulze Isfort, Gero, 33428 Harsewinkel (DE)
(74) Vertreter: Busse & Busse
(86) Internationale Anmeldenummer: PCT/EP2018/086731
(87) Internationale Veröffentlichungsnummer: WO 2020/104049

(56) Entgegenhaltungen:
- EP-A1- 0 323 610
- WO-A1-2018/091118
- CN-A- 107 324 628
- DE-A1- 10 112 357
- JP-A- 2004 105 878
- PT-E- 2 477 949
- RU-C1- 2 585 635

## Beschreibung

Die Erfindung bezieht sich auf ein Verfahren zur Entkeimung von flüssigen und/oder wässrigen Medien (Suspensionen).

Des Weiteren kann diesem Verfahren ein weiteres Verfahren vorgeschaltet sein, bei dem feste und flüssige Bestandteile einer Fest-Flüssig-Mischung separiert werden, wobei die Fest-Flüssig-Mischung über einen Zulauf einer in einem im Wesentlichen geschlossenen Gehäuse angeordneten, ein Schwingsieb aufweisenden Schwingfördervorrichtung aufgegeben wird und innerhalb des Gehäuses in einem Raum oberhalb der Schwingsiebes ein gegenüber dem Umgebungsdruck des Gehäuses negativer Druck (Unterdruck) erzeugt wird und wobei innerhalb des Gehäuses in dem Raum unterhalb des Schwingsiebes ein gegenüber dem Umgebungsdruck negativerer Druck (Unterdruck) angelegt als im Raum oberhalb des Schwingsiebes, so dass der Unterdruck unterhalb des Schwingsiebes größer ist als der Unterdruck oberhalb des Schwingsiebes und wobei der jeweilige Unterdruck unterhalb des Schwingsiebes und der jeweilige Unterdruck oberhalb des Schwingsiebes gezielt über Steuereinrichtungen derart gesteuert werden können, dass die Druckdifferenz im Einzelnen im Hinblick auf vorliegende Prozessparameter exakt einstellbar ist.

Ein derartiges Verfahren ist aus der WO 2018/091118 A1 bekannt.

Dieses Verfahren dient insbesondere dazu, für die verschiedensten Anwendungsfälle flüssige Medien zu entkeimen und zu reinigen und in den Fällen, wo noch Feststoffpartikel in einem zu reinigenden Fest-Flüssig-Gemisch vorhanden sind, zunächst noch mit hohem Wirkungsgrad die Feststoffe auszusondern, um die Flüssigkeit danach mit den dort beschriebenen Verfahrensschritten zu entkeimen und zu reinigen.

In einigen Anwendungsfällen kann es vorkommen, dass das Medium, nach der in der vorgenannten Patentanmeldung beschriebenen Kavitationsbehandlung in dem ferromagnetischen Stator (FMS) noch Feststoffe aufweist, die mit einer Schlammabscheidung bei einem Unterdruck von < 1 bar nicht hinreichend sedimentiert werden können. Dies ist nachteilig.

Es ist Aufgabe der vorliegenden Erfindung, das Verfahren derart weiterzubilden, dass Feinstfeststoffpartikel, die nach der Behandlung in dem "FMS" noch in dem Medium (Suspension) vorhanden sein sollten, weiter auszusondern sind.

Dazu ist erfindungsgemäß vorgesehen, dass dem ferromagnetischen Stator (FMS) ein weitere Verfahrensstufe, nämlich eine weitere Sedimentationsstufe nachgeschaltet ist, bei der jedoch nicht mehr mit einem Unterdruck gearbeitet wird, sondern bevorzugt mit einem Druck, der größer ist als 1 bar, bevorzugt 1,5 bar ist. Dabei können bevorzugt Sedimentationsbehälter eingesetzt werden in vorzugsweise einer Silobehälterform, die eine Höhe von > 10 Meter aufweisen und die von unten nach oben durchströmt werden, so dass die aufzunehmende Flüssigkeit von unten nach oben durch den Sedimentationsbehälter geführt wird. Dabei wurde festgestellt, dass Sedimentationsbehandlungen bei einem Überdruck von 1 bis 1,5 bar sich sehr bald und sehr schnell noch vorhandene Feststoffpartikel derart ausfällen und zusammenbacken, dass sie auf einfache Weise im unteren Teil als Flumat in einen Sumpf unterhalb des Sedimentationsbehälters fallen und dort auf sehr einfacher Weise abgesondert werden können. Die so von Feststoffpartikeln befreite Flüssigkeit kann noch nachfolgenden Feinstsedimentationen in zweiten und gegebenenfalls weiteren Sedimentationsbehältern (Option) ausgesetzt werden, sei es als einzelne, in einer Kaskade hintereinander aufgestellte und strömungsmäßig miteinander verbundene Behälter oder in einer Kaskade aus Reihen aus zwei parallel geschalteten Behältern in mehrfacher Zahl. Auch in diesem zweiten Sedimentationsbehälter oder auch im dritten, vierten und in weiteren Sedimentationsbehältern kann ein Druck von bevorzugtermaßen 1,5 bar herrschen, der jedoch je nach aufzugebenden Gut optimiert eingestellt werden kann. Es ist möglich, nach jeder Sedimentationsstufe Suspensionen ganz oder teilweise bzw. zurückzuführen in vorgehende Sedimentationsstufen oder bis in den Zulauf des ferromagnetischen Stators. Es hat sich gezeigt, dass es vorteilhaft sein kann, zumindest einen Teil der Suspension nach einer Sedimentation zurück zu führen, um diesen als Impfstoff bzw. Prozessbeschleuniger im ferromagnetischen Stator zu nutzen. Dies kann auch direkt nach der Behandlung in dem FMS geschehen.

Zusätzlich zur Absonderung von Sedimentationspartikeln ist eine besondere Reststoffzerkleinerungsstufe vorgesehen, die zur Kavitationsbehandlung und zur weiteren Zerkleinerung von etwa noch in der Suspension vorgesehenen Feinstfeststoffpartikeln beiträgt. Dabei sorgt die zusätzliche Reststoffzerkleinerungsstufe dafür, dass vorhandene Feinstoffpartikel noch weiter zerkleinert werden, wodurch sich die Oberflächen der in dieser Suspension noch vorhandenen Feststoffpartikel erheblich vergrößern. Diese weitere Reststoffzerkleinerungsstufe, die als Restzerkleinerungsstufe in einem Feststoffrestzerkleinerer durchgeführt wird und vorzugsweise zumindest zwei Restzerkleinerungsvorrichtungen aufweist, kann dem ferromagnetischen Stator (FMS) vor- und/oder nachgeschaltet sein.

So kann die Suspension nach der Behandlung im FMS direkt dem Reststofffeststoffzerkleinerer mit der oder den Zerkleinerungsvorrichtung(en) und danach der ersten Sedimentationsstufe zugeführt werden. Die Zerkleinerungsvorrichtungen können aber auch vor der Kavitationsbehandlung im FMS aktiv werden, so dass die restzerkleinerte Suspension der Kavitationsbehandlung im Feststoffrestzerkleinerer aufgegeben werden kann.

In dem Feststoffrestzerkleinerer kann die zu zerkleinernde Suspension beschleunigt und über zumindest eine Restzerkleinerungsvorrichtung dem Restzerkleinerungsvorgang ausgesetzt werden. Dabei kann eine Strömungsführung derart vorgenommen werden, dass die zu zerkleinernde Suspension zunächst einer ersten Restzerkleinerungsvorrichtung zugeführt wird und dann wahlweise ganz oder teilweise abgeführt wird. Im Regelfall wird sie jedoch zu einer zweiten Restzerkleinerungsvorrichtung geführt, um dann nochmals über einen Beschleuniger beschleunigt der ersten Restzerkleinerungsvorrichtung zugeführt zu werden.

Dabei ist dem Suspensionsstrom vorzugsweise eine Steuereinheit zugeordnet, über die gesteuert werden kann, ob aufgrund der Einstellung der Pumpe bzw. Fördergeschwindigkeit des Druckes der Abführpumpe zumindest ein Teil der so zerkleinert behandelten Suspension abgeführt werden oder ein Teil erneut dem Zerkleinerungsvorgang der ersten Zerkleinerungsvorrichtung zugeführt wird. Dabei können beliebige Verhältnisse hinsichtlich der Abführrate und der Rate, die erneut dem Zerkleinerungsprozess zugeführt wird, eingestellt werden, beispielsweise 50 : 50, 60 : 40, 40 : 60 usw. Durch diese teilweisen Mehrfachumläufe kann das gesamte Verfahren derart gesteuert durchgeführt werden, dass Suspensionen mit Feinstanteilen von Restfeststoffpartikeln der Kavitationsbehandlung und/oder auch dem nachfolgenden Sedimentationsprozess in den Sedimentationsbehältern zugeführt wird. Durch entsprechende Zugabe von Bindemitteln wie beispielsweise Kalk und/oder Kalkmilch oder einem anderem Fällungsmittel kann an jeder Stelle noch ein Bindeprozess mit den Feststoffpartikeln bzw. den Restfeststoffpartikeln anfallen, wobei aufgrund der vergrößerten Oberflächen der zerkleinerten Feststoffpartikeln das Bindeergebnis derart gut ist, dass die Feststoffpartikel vollständig oder beinahe vollständig durch Sedimentation heraussedimentiert werden können.

Die Vorrichtung (nicht beansprucht) weist die bereits vorbeschriebenen Restzerkleinerungswerkzeuge bzw. den Feststoffrestzerkleinerer auf. Bei den Reststoffzerkleinerungsvorrichtungen handelt es sich um Zerkleinerungswerkzeuge, die eine Pumpe aufweisen und ein besonderes Zerkleinerungswerkzeug mit einem rotierenden austauschbaren Zerkleinerungsmesser, das entlang von austauschbaren Gegenschneiden rotiert. Diese sind bevorzugtermaßen derart angeordnet über einen Umfang von 360° um eine

Antriebswelle verteilt am Gehäuse der Welle, so dass während eines Umlaufes des Zerkleinerungswerkzeuges dieses jeweils zu den beiden Enden Auflagepunkte bzw. Auflageflächen an den wechselbaren Gegenschneiden hat, was zu einem enormen verschleißarmen Betrieb beiträgt, aber auch das Zerkleinerungsergebnis außerordentlich günstig beeinflusst.

Zur weiteren Erläuterung der Erfindung wird auf weitere Unteransprüche und auf die nachfolgende Beschreibung und die Zeichnung verwiesen.

In der Zeichnung sind verschiedene Anlageschemata dargestellt und ein Ausführungsbeispiel eines Aggregates, das die Restzerkleinerungsvorrichtungen aufweist sowie jeweils ein Ausführungsbeispiel eines Zerkleinerungswerkzeuges. Im Einzelnen zeigen
- Fig. 1:: ein erstes Beispiel einer Anlage, welche im erfindungsgemäßen Verfahren verwendet wird, mit insgesamt zwei Sedimentationsbehältern,
- Fig. 2:: ein alternatives Beispiel einer Anlage mit insgesamt acht Sedimentationsbehältern;

- Fig. 3:: eine Anlage mit vier Sedimentationsbehältern,
- Fig. 4.1:: ein Beispiel eines Feststoffzerkleinerers, zur Verwendung im erfindungsgemäßen Verfahren, mit zwei Feststoffrestzerkleinerungsvorrichtungen in einer Ansicht von vorne;
- Fig. 4.2:: das Beispiel nach Fig. 4.1 in einer Ansicht von hinten;
- Fig. 5:: in einer perspektivischen Seitenansicht ein Beispiel eines Zerkleinerungswerkzeuges einer Feststoffrestzerkleinerungsvorrichtung,
- Fig. 6:: eine Draufsicht auf das in Fig. 5 gezeigte Werkzeug, und
- Fig. 7:: eine Seitenansicht des Werkzeuges nach den Fig. 5 und 6.

In der Zeichnung sind grundsätzlich übereinstimmende Teile mit übereinstimmenden Bezugsziffern versehen.

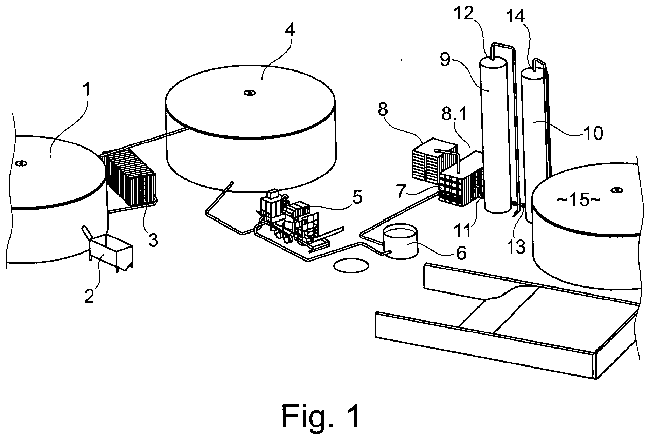

In Fig. 1 ist ein erstes Anlageschema gezeigt, bei der Gärreste aus einem Gärreste-Endlager zu entnehmen sind und zwar aus einem Fermenter einer GUS (Gewässer-Umwelt-Schutz)-Anlage. Die hier beschrieben Anlage ist genauso gut geeignet zur Aufbereitung von Gülle oder sonstigen zu reinigenden Flüssigkeiten und Fest-Flüssig-Gemischen, wie sie im Einzelnen auch im eingangs genannten Dokument WO2018/091118 A1 sind. Die Anlagenbauteile, die vorliegend benutzt werden, entsprechen in ihrer Ausgestaltung auch den Anlagen und Vorrichtungsteilen, wie sie in der vorgenannten Patentanmeldung vorbeschrieben sind mit Ausnahme der Sedimentationsbehältnisse und den dazugehörigen Feststoffzerkleinerern und Kalkdosieranlagen.

Allgemein mit 1 ist ein Fermenter beziffert, der über das Teil 2 mit Material versorgt wird. Zusätzlich kann an dort gezeigter Stelle eine erste Feststoffzerkleinerungsanlage 3 vorgesehen sein. Dem Fermenter 1 ist Material zu entnehmen, zu zerkleinern und wieder zurückführen.

Von dem Fermenter 1 kann dann Material dem Gärrestelager 4 zugeführt werden, von wo es zu der Anlage 5 geführt wird, wo Fest-Flüssig-Mischungen separiert werden, die mit einem Schwingsieb arbeitet, und wobei sämtliche Innenräume einem Unterdruck ausgesetzt sind, allerdings derart, dass der Unterdruck oberhalb des Schwingsiebes geringer ist als der Unterdruck unterhalb des Schwingsiebes.

Von dieser Anlage 5 mit dem Schwingsieb kann es dann zu einem Zwischenlager 6 mit separierter Gülle gehen und von dort zu der Kavitationsbehandlung des Mediums, nämlich der FMS-Strahlkavitation bei einem Unterdruck von < 1 bar, bevorzugt 0,3 bis 0,7 bar. Dazu ist ein ferromagnetischer Stator (FMS) vorgesehen, dem auch noch eine Kalkdosieranlage 8 vorgeordnet ist. Dort erfolgt die Behandlung derart, wie sie im genannten Dokument WO2018/091118 A1 im Einzelnen näher beschrieben ist.

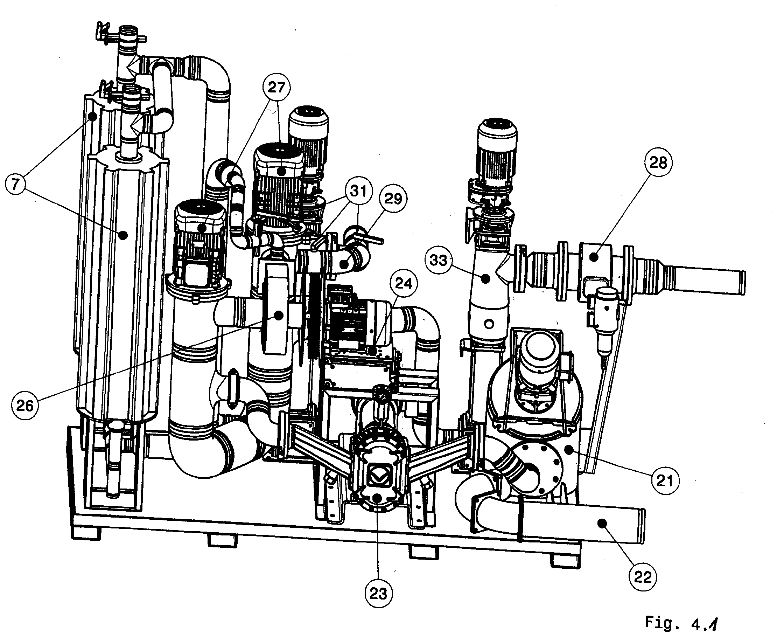

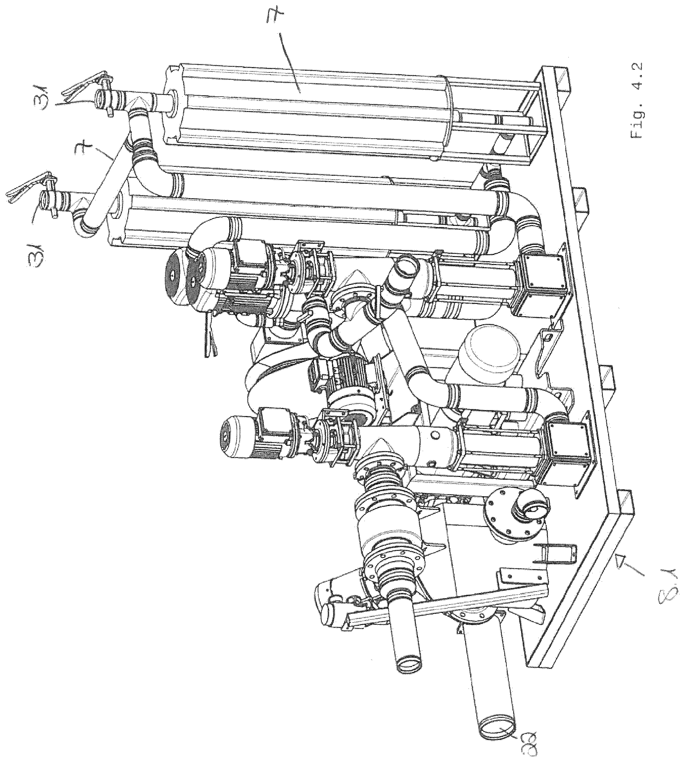

Von der Kalkdosieranlage 8 kann es dann im Übrigen noch zu einem Feststoffrestzerkleinerer 8.1 gehen mit zumindest zwei Feststoffrestzerkleinerungsvorrichtungen, wie diese näher in Fig. 4 dargestellt und im Nachfolgenden näher erläutert sind.

Diesem Feststoffrestzerkleinerer 8.1 ist eine erste und zweite Sedimentationsstufe nachgeordnet mit einem ersten Sedimentationsbehälter 9 und einem zweiten Sedimentationsbehälter 10, in denen jeweils ein Überdruck herrscht, also ein Druck von > 1 bar, bevorzugt 1,5 bar. Dort wird das zu sedimentierende Medium bei 11 im Fußbereich des ersten Sedimentationsbehälters 9 zugeführt und im Kopfbereich bei 12 wiederum abgeführt. Dann kann es bei 13 dem zweiten Sedimentationsbehälter 10 zugeführt werden. Bei 14 wird es wieder entnommen und dem Vorratsbehälter 15 als sedimentierte Flüssigkeit zugeführt.

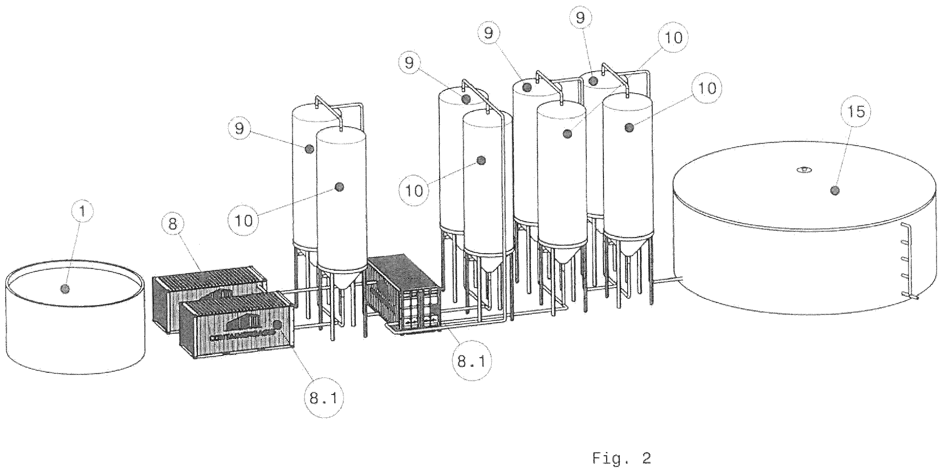

In Fig. 2 ist ein alternatives Anlagenschema dargestellt, bei dem insgesamt vier Paare von Sedimentationsbehältern 9 und 10 vorgesehen sind, so dass insgesamt vier Sedimentationsstufen durch diese Sedimentationsbehälter 9 und 10 gebildet sind, wobei der ersten Sedimentationsstufe wiederum ein Reststoffzerkleinerer 8.1 mit integrierter Anlage mit integriertem Strahlkavitator vorgeordnet und im Übrigen ein zweiter Reststoffzerkleinerer mit zugeordnetem Strahlkavitator nachgeordnet ist.

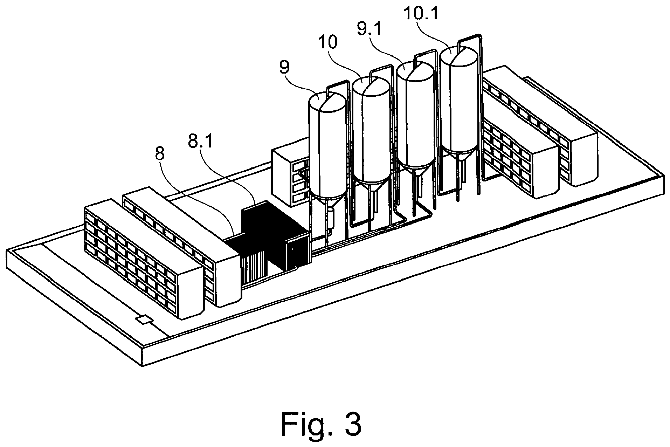

Im Anlagenschema nach Fig. 3 sind insgesamt vier Sedimentationsbehälter in Reihe geschaltet mit den Bezugsziffern 9, 10, 9.1 und 10.1, wobei wiederum ein Kalkdosierer und ein Feststoffrestzerkleinerer 8.1 vorgesehen sind und einer Kalkanlage 8.

In Fig. 4 ist näher der Feststoffrestzerkleinerer 8.1 veranschaulicht.

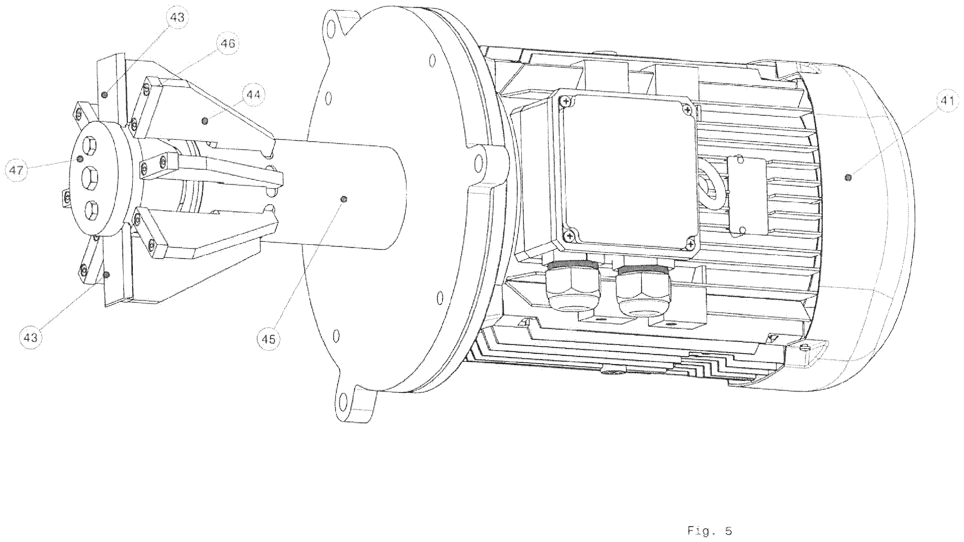

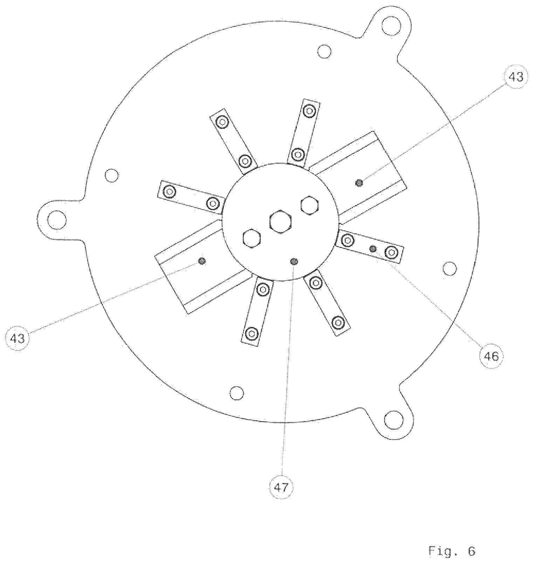

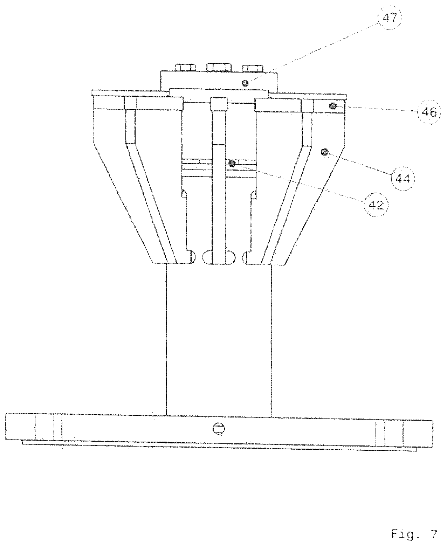

Mit 21 ist ein Cutter beziffert. Mit 22 ist ein Austragsrohr beziffert, das dazu dient, etwaige abgesonderte Steine und Fremdstoffe abzusondern, die sich im Steinfang des Cutters gesammelt haben. Mit 23 ist die Hauptansaugpumpe beziffert. 24 bezeichnet eine Motorwippe für einen Antriebsmotor. Die Ansaugpumpe 23 ist über eine Saugleitung mit dem Cutter 21 verbunden und über die Druckleitung mit der nachgeordneten ersten Feststoffrestzerkeinerungsvorrichtung 27. Nach Einmündung der Druckleitung in die Leitung der ersten Feststoffrestzerkleinerungsvorrichtung 27 ist ein Beschleuniger 26 vorgesehen, der von dem auf der Wippe 24 montierten Motor angetrieben ist. Von der ersten Feststoffrestzerkleinerungsvorrichtung 27 (links in der Zeichnung) geht es über den Beschleuniger 26 zur zweiten Feststoffrestzerkleinerungsvorrichtung 27. Beide Feststoffrestzerkleinerungsvorrichtungen 27 haben oben einen Motor und ein Zerkleinerungswerkzeug 40, wie dies näher in den Figuren 5 bis 7 veranschaulicht ist. Mit 28 ist ein Kugelrückschlagventil beziffert und mit 29 ein Absperrhahn für einen Bypass, um diesen mechanisch abzusperren. Mit 30 sind ein Druckwächter beziffert und mit 31 Absperrhähne. Mit 33 ist eine Exzenterschneckenpumpe beziffert und mit 34 wiederum ein Absperrhahn.

Im Einzelnen nicht sichtbar ist eine Steuerungsvorrichtung vorgesehen, die die Drücke in einzelnen Anlagenteilen verarbeitet und entsprechende Wege ganz oder teilweise öffnet wie für den Bypass 29 und für die Abführleitung, um die zu zerkleinernden Feststoffe in der mitgeführten Suspension gesteuert der Abführleitung zuzuführen oder erneut in den Bypass zu geben, um von der zweiten Zerkleinerungsvorrichtung 27 kommend wiederum zu der ersten Zerkleinerungsvorrichtung 27 zu führen. Dies kann mehrmals erfolgen. Es ist auch möglich, nach jeder Anlagenstoffstufe die behandelte Suspension ganz oder teilweise einer der vorgehenden Stufen zur erneuten Behandlung wieder zu zuführen.

Das Zerkleinerungswerkzeug 40, wie es in Fig. 5 dargestellt ist, ist von einem Motor 41 über eine Welle 42 angetrieben mit einem rotierenden Messer 43 und insgesamt acht vorgesehenen Gegenschneiden 44, die gleichmäßig über den Umfang von 360° verteilt sind, wobei die Breite des Messers 43 und das Gehäuse 45, deren Länge und die Breite und der Abstand der sternförmig um die Mutterwelle 42 angeordneten Gegenschneidenhalterungen 44 derart vorgesehen sind, dass während der Umdrehung das Schneidmesser 43 jeweils zwei Auflagepunkte an den verschiedenen austauschbaren Gegenschneiden 46 vorliegen. 46 beschreibt austauschbare Gegenschneiden von oben an den Gegenschneidenhaltern. 47 beschreibt den Schmelzwechselkopf zur Fixierung der Messer durch Einklemmen.

## Patentansprüche

1. Verfahren zur Reinigung und/oder Entkeimung von flüssigen und/oder wässerigen Suspensionen, umfassend folgende Verfahrensschritte:
Kavitationsbehandlung des Mediums, insbesondere mit Strahlkavitation, bei einem Unterdruck von < 1 bar, bevorzugt 0,03 bis 0,07 bar, durch Behandlung der Suspension in einem ferromagnetischen Stator (7) mit einem magnetischen Drehfeld und magnetischen und/oder magnetisierbaren Elementen, insbesondere mit ferromagnetischen Nadeln, wobei der Kavitationsbehandlung der Suspension in dem ferromagnetischen Stator eine Feststoffzerkleinerung in einem Feststoffrestzerkleinerer (8.1) mit zumindest einer Feststoffrestzerkleinerungsvorrichtung (27) mit einem rotierenden Schneidwerk mit rotierenden Schneidmessern bei einem Druck von < 1 bar, bevorzugt 0,01 bis 0,7 bar vor- oder nachgeschaltet ist,
**dadurch gekennzeichnet, dass** der Kavitationsbehandlung der Suspension durch die Behandlung der Suspension in einem ferromagnetischen Stator ein Sedimentationsverfahren bei einem Druck > 1 bar in einer Sedimentationseinheit (9, 10) mit
zumindest einer Sedimentationsstufe nachgeschaltet ist, dass die so aufbereitete Suspension entweder nach der Kavitationsbehandlung direkt oder von dem der Kavitationsbehandlung nachgeschalteten Feststoffrestzerkleinerer (8.1) mit der zumindest einen Feststoffrestzerkleinerungsvorrichtung (27) der Sedimentationseinheit (9, 10) bei einem Druck > 1 bar zugeführt wird, wobei ein Fällungsmittel, Kalk oder Kalkmilch der Suspension vor dem Eintritt in den ferromagnetischen Stator (7) zugeführt wird.

2. Verfahren nach Anspruch 1, **dadurch gekennzeichnet, dass** das Sedimentationsverfahren in zumindest einer Sedimentationsstufe durchgeführt wird.

3. Verfahren nach Anspruch 1 oder 2, **dadurch gekennzeichnet, dass** der Suspension pro Masseneinheit Suspension mindestens 0,01 bis 99,95 % Fällungsmittel, fällungsbeschleunigende Mittel, prozessbeschleunigende Stoffe zugegeben wird.

4. Verfahren nach einem der Ansprüche 1 bis 3, **dadurch gekennzeichnet, dass** die Suspension von einer ersten, und/oder einer zweiten und/oder einer dritten und/oder einer vierten und/oder einer n-ten Sedimentationsstufe zu dem elektromagnetischen Stator (7) zurückgeführt wird.

5. Verfahren nach Anspruch 4, **dadurch gekennzeichnet, dass** einer rückgeführten Suspension und/oder einem Teil einer rückgeführten Suspension ein Fällungsmittel zugeführt wird.

6. Verfahren nach einem der vorhergehenden Ansprüche, **dadurch gekennzeichnet, dass** das Sedimentationsverfahren in einer Sedimentationskaskade aus einzeln hintereinander geschalteten Sedimentationsbehältern (9, 10, 9.1, 10.1) durchgeführt wird.

7. Verfahren nach Anspruch 6, **dadurch gekennzeichnet, dass** das Sedimentationsverfahren einer Kaskade aus jeweils Reihen von Sedimentationsbehältern (9, 10, 9.1, 10.1) durchgeführt wird, die jeweils aus zumindest zwei Sedimentationsbehältern (9, 10) bestehen.

8. Verfahren nach einem der vorhergehenden Ansprüche, **dadurch gekennzeichnet, dass** die in dem Restfeststoffzerkleinerer (8.1) zu zerkleinernde Suspension angesaugt und über eine erste Feststoffrestzerkleinerungsvorrichtung (27) und über eine zweite Feststoffrestzerkleinerungsvorrichtung (27) geführt wird, wobei die Suspension über einen zwischen der ersten Feststoffrestzerkleinerungsvorrichtung (27) und der zweiten Feststoffrestzerkleinerungsvorrichtung (27) angeordneten Zentrifugalbeschleuniger (26) beschleunigt wird und wobei die von der zweiten Feststoffrestzerkleinerungsvorrichtung (27) zerkleinerte Suspension von einer Steuereinrichtung gesteuert einer Abführleitung oder einer Bypassleitung (29) zur erneuten Zuführung zu der ersten Feststoffrestzerkleinerungsvorrichtung (27) zuführbar ist.

9. Verfahren nach einem der Ansprüche 1 bis 8, **dadurch gekennzeichnet, dass** dem ferromagnetischen Stator (7) eine Pumpe nachgeschaltet ist, so dass über die Vakuumpumpe die dem ferromagnetischen Stator (7) zuzuführende Suspension angesaugt wird und dass eine Überwachungsvorrichtung vorgesehen ist, die den Durchfluss der Pumpe steuert.

10. Verfahren nach Anspruch 9, **dadurch gekennzeichnet, dass** der Durchfluss durch die Pumpe in Abhängigkeit der aufgenommenen Stromstärke in dem ferromagnetischen Stator (7) in einem Arbeitsbereich von 10 A bis 30 A steuert.

11. Verfahren nach einem der Ansprüche 1 bis 10, **dadurch gekennzeichnet, dass** die Suspension oder ein Teil von dieser über ein oder mehr ferromagnetische Statoren (7) geführt wird und zwischen den ferromagnetischen Statoren (7) ein weiterer Beschleuniger angeordnet ist, der wiederum einen Mehrfachdurchlauf ermöglicht.

12. Verfahren nach einem der vorrangehenden Ansprüche 1 bis 11, **dadurch gekennzeichnet, dass** eine Rückführung der Suspension aus jeder einzelnen Sedimentationsstufe, aus den jeweiligen Feststoffrestzerkleinerern und/oder aus dem ferromagnetischen Stator (7) zu einer Einheit einer vorhergehenden Verfahrensstufe erfolgt kann.

13. Verfahren nach einem der vorhergehenden Ansprüche 1 bis 12, **dadurch gekennzeichnet, dass** nach einer Sedimentationsstufe die Suspension ganz oder teilweise zurück zum ferromagnetischen Stator (7) geführt wird und dort einer im ferromagnetischer Stator (7) noch zu behandelnden Suspension als Impfstoff oder Prozessbeschleuniger zugeführt wird.

14. Verfahren nach einem der vorhergehenden Ansprüche, **dadurch gekennzeichnet, dass** eine Steuereinheit vorgesehen ist, die den Ansaugdruck einer Abführpumpe (33) im Verhältnis zu dem aufgebauten Druck einer Zuführpumpe (23) steuert.

15. Verfahren nach Anspruch 8, **dadurch gekennzeichnet, dass** die zu zerkleinernde Suspension einer Mehrfachbehandlung in den Zerkleinerungsvorrichtungen (27) ausgesetzt wird, wobei die Mehrfachzerkleinerung umsteuerbar ist, so dass pro Durchlauf ein Verhältnis von 50 : 50, 40 : 60, 70 : 30 im Verhältnis zu der abzuführenden Suspension oder über die Bypassleitung (29) führende Suspension einstellbar ist.

## Claims

1. Process for purifying and/or degerming liquid and/or aqueous suspensions, comprising the following process steps:
cavitation treatment of the medium, especially by means of jet cavitation, at a negative pressure of < 1 bar, preferably 0.03 to 0.07 bar, by treatment of the suspension in a ferromagnetic stator (7) having a rotating magnetic field and magnetic and/or magnetizable elements, especially having ferromagnetic needles, wherein upstream or downstream of the cavitation treatment of the suspension in the ferromagnetic stator is solids comminution in a residual solids comminutor (8.1) having at least one residual solids comminution device (27) having a rotating cutting mechanism with rotating cutting blades at a pressure of < 1 bar, preferably 0.01 to 0.7 bar, **characterized in that** downstream of the cavitation treatment of the suspension by the treatment of the suspension in a ferromagnetic stator is a sedimentation process at a pressure > 1 bar in a sedimentation unit (9, 10) having at least one sedimentation stage, **in that** the thus processed suspension is supplied to the sedimentation unit (9, 10) at a pressure > 1 bar either directly after the cavitation treatment or from the residual solids comminutor (8.1) downstream of the cavitation treatment and having the at least one residual solids comminution device (27), wherein a precipitant, lime or milk of lime is supplied to the suspension before entry into the ferromagnetic stator (7).

2. Process according to Claim 1, **characterized in that** the sedimentation process is carried out in at least one sedimentation stage.

3. Process according to Claim 1 or 2, **characterized in that** at least 0.01% to 99.95% precipitant, precipitation-accelerating agents or process-accelerating substances is added to the suspension per unit of mass of the suspension.

4. Process according to any of Claims 1 or 3, **characterized in that** the suspension is recycled to the electromagnetic stator (7) from a first and/or a second and/or a third and/or a fourth and/or an n-th sedimentation stage.

5. Process according to Claim 4, **characterized in that** a precipitant is supplied to a recycled suspension and/or a portion of a recycled suspension.

6. Process according to any of the preceding claims, **characterized in that** the sedimentation process is carried out in a sedimentation cascade of sedimentation tanks (9, 10, 9.1, 10.1) individually connected in series.

7. Process according to Claim 6, **characterized in that** the sedimentation process is carried out in a cascade of rows of sedimentation tanks (9, 10, 9.1, 10.1) that each consist of at least two sedimentation tanks (9, 10).

8. Process according to any of the preceding claims, **characterized in that** the suspension to be comminuted in the residual solids comminutor (8.1) is sucked in and is guided via a first residual solids comminution device (27) and via a second residual solids comminution device (27), wherein the suspension is accelerated via a centrifugal accelerator (26) arranged between the first residual solids comminution device (27) and the second residual solids comminution device (27) and wherein the suspension comminuted by the second residual solids comminution device (27) is suppliable, under control by a controller, to a discharge line or a bypass line (29) for renewed supply to the first residual solids comminution device (27).

9. Process according to any of Claims 1 to 8, **characterized in that** downstream of the ferromagnetic stator (7) is a pump, so that the suspension to be supplied to the ferromagnetic stator (7) is sucked in via the vacuum pump, and **in that** a monitoring device which controls the flow of the pump is provided.

10. Process according to Claim 9, **characterized in that** the flow through the pump is controlled depending on the consumed current in the ferromagnetic stator (7) within an operating range from 10 A to 30 A.

11. Process according to any of Claims 1 to 10, **characterized in that** the suspension or a portion thereof is guided via one or more ferromagnetic stators (7), and arranged between the ferromagnetic stators (7) is a further accelerator which in turn allows multiple passes.

12. Process according to any of the preceding Claims 1 to 11, **characterized in that** the suspension can be recycled from each individual sedimentation stage, from the respective residual solids comminutors and/or from the ferromagnetic stator (7) to a unit of a preceding process stage.

13. Process according to any of the preceding Claims 1 to 12, **characterized in that**, after a sedimentation stage, the suspension is completely or partially recycled to the ferromagnetic stator (7), where it is supplied as an inoculant or process accelerator to a suspension yet to be treated in the ferromagnetic stator (7).

14. Process according to any of the preceding claims, **characterized in that** a control unit is provided which controls the suction pressure of a discharge pump (33) in relation to the built-up pressure of a supply pump (23) .

15. Process according to Claim 8, **characterized in that** the suspension to be comminuted is exposed to multiple treatments in the comminution devices (27), wherein the multiple comminutions are reconfigurable, so that a ratio of 50:50, 40:60 or 70:30 in relation to the suspension to be discharged or suspension to be guided via the bypass line (29) is settable per pass.

## Revendications

1. Procédé de purification et/ou de désinfection de suspensions liquides et/ou aqueuses, comprenant les étapes de procédé suivantes :
le traitement par cavitation du milieu, notamment avec une cavitation par jet, à une sous-pression de < 1 bar, de préférence de 0,03 à 0,07 bar, par traitement de la suspension dans un stator ferromagnétique (7) avec un champ magnétique rotatif et des éléments magnétiques et/ou magnétisables, notamment avec des aiguilles ferromagnétiques, le traitement par cavitation de la suspension dans le stator ferromagnétique étant précédé ou suivi d'un broyage des solides dans un broyeur de résidus solides (8.1) avec au moins un dispositif de broyage de résidus solides (27) avec un mécanisme de coupe rotatif avec des lames de coupe rotatives à une pression de < 1 bar, de préférence de 0,01 à 0,7 bar, **caractérisé en ce que** le traitement par cavitation de la suspension par le traitement de la suspension dans un stator ferromagnétique est suivi d'un traitement de sédimentation à une pression > 1 bar dans une unité de sédimentation (9, 10) avec au moins une étape de sédimentation, **en ce que** la suspension ainsi préparée est amenée à l'unité de sédimentation (9, 10) à une pression > 1 bar soit directement après le traitement par cavitation, soit par le broyeur de résidus solides (8.1) suivant le traitement par cavitation, avec l'au moins un dispositif de broyage de résidus solides (27), un agent de précipitation, de la chaux ou du lait de chaux étant ajouté à la suspension avant l'entrée dans le stator ferromagnétique (7).

2. Procédé selon la revendication 1, **caractérisé en ce que** le procédé de sédimentation est réalisé en au moins une étape de sédimentation.

3. Procédé selon la revendication 1 ou 2, **caractérisé en ce qu'**au moins 0,01 à 99,95 % d'agents de précipitation, d'agents accélérant la précipitation, de substances accélérant le processus sont ajoutés à la suspension par unité de masse de suspension.

4. Procédé selon l'une quelconque des revendications 1 à 3, **caractérisé en ce que** la suspension est recyclée vers le stator électromagnétique (7) à partir d'une première et/ou d'une deuxième et/ou d'une troisième et/ou d'une quatrième et/ou d'une n-ième étape de sédimentation.

5. Procédé selon la revendication 4, **caractérisé en ce qu'**un agent de précipitation est ajouté à une suspension recyclée et/ou à une partie d'une suspension recyclée.

6. Procédé selon l'une quelconque des revendications précédentes, **caractérisé en ce que** le procédé de sédimentation est réalisé dans une cascade de sédimentation composée de récipients de sédimentation (9, 10, 9.1, 10.1) connectés individuellement en série.

7. Procédé selon la revendication 6, **caractérisé en ce que** le procédé de sédimentation est réalisé dans une cascade de rangées respectives de récipients de sédimentation (9, 10, 9.1, 10.1), qui sont chacune constituées d'au moins deux récipients de sédimentation (9, 10).

8. Procédé selon l'une quelconque des revendications précédentes, **caractérisé en ce que** la suspension à broyer dans le broyeur de solides résiduels (8.1) est aspirée et acheminée par le biais d'un premier dispositif de broyage de résidus solides (27) et par le biais d'un deuxième dispositif de broyage de résidus solides (27), la suspension étant accélérée par le biais d'un accélérateur centrifuge (26) agencé entre le premier dispositif de broyage de résidus solides (27) et le deuxième dispositif de broyage de résidus solides (27), et la suspension broyée par le deuxième dispositif de broyage de résidus solides (27) pouvant être amenée de manière contrôlée par un dispositif de contrôle à une conduite d'évacuation ou à une conduite de dérivation (29) pour être à nouveau amenée au premier dispositif de broyage de résidus solides (27).

9. Procédé selon l'une quelconque des revendications 1 à 8, **caractérisé en ce que** le stator ferromagnétique (7) est suivi d'une pompe, de telle sorte que la suspension à amener au stator ferromagnétique (7) est aspirée par le biais de la pompe à vide, et **en ce qu'**un dispositif de surveillance est prévu, qui contrôle le débit de la pompe.

10. Procédé selon la revendication 9, **caractérisé en ce que** le débit à travers la pompe est contrôlé en fonction de l'intensité de courant absorbée dans le stator ferromagnétique (7) dans une plage de travail de 10 A à 30 A.

11. Procédé selon l'une quelconque des revendications 1 à 10, **caractérisé en ce que** la suspension ou une partie de celle-ci est acheminée par le biais d'un ou plusieurs stators ferromagnétiques (7) et un autre accélérateur est agencé entre les stators ferromagnétiques (7), qui permet à son tour un passage multiple.

12. Procédé selon l'une quelconque des revendications 1 à 11 précédentes, **caractérisé en ce qu'**un recyclage de la suspension à partir de chaque étape de sédimentation individuelle, à partir des broyeurs de résidus solides respectifs et/ou à partir du stator ferromagnétique (7) vers une unité d'une étape de procédé précédente peut avoir lieu.

13. Procédé selon l'une quelconque des revendications 1 à 12 précédentes, **caractérisé en ce qu'**après une étape de sédimentation, la suspension est recyclée en totalité ou en partie vers le stator ferromagnétique (7) et y est ajoutée à une suspension qui doit encore être traitée dans le stator ferromagnétique (7) en tant qu'inoculant ou accélérateur de processus.

14. Procédé selon l'une quelconque des revendications précédentes, **caractérisé en ce qu'**une unité de contrôle est prévue, qui contrôle la pression d'aspiration d'une pompe d'évacuation (33) par rapport à la pression établie d'une pompe d'alimentation (23).

15. Procédé selon la revendication 8, **caractérisé en ce que** la suspension à broyer est soumise à un traitement multiple dans les dispositifs de broyage (27), le broyage multiple étant réversible de telle sorte qu'un rapport de 50:50, 40:60, 70:30 par rapport à la suspension à évacuer ou à la suspension à acheminer par le biais de la conduite de dérivation (29) peut être ajusté pour chaque passage.
